# EUROPÄISCHE PATENTSCHRIFT

(11) **EP 0 650 321 B1**
(45) Veröffentlichungstag und Bekanntmachung des Hinweises auf die Patenterteilung: **20.03.1996**
(21) Anmeldenummer: 93912747.8
(22) Anmeldetag: 21.05.1993
(51) Int. Cl.: A01J 7/00

(54) **VENTIL ZUM RÜCKSPÜLEN VON MELKBECHERN IN MELKANLAGEN**
VALVE FOR BACKWASHING MILKING CUPS OF MILKING MACHINES
VANNE POUR LE RETROLAVAGE DES GOBELETS TRAYEURS DES MACHINES A TRAIRE

(30) Priorität: 21.07.1992 DE 4224001
(43) Veröffentlichungstag der Anmeldung: 03.05.1995
(73) Patentinhaber: Westfalia Separator AG, D-59302 Oelde (DE)
(72) Erfinder: BÜCKER, Heinrich, D-4831 Langenberg (DE)
(86) Internationale Anmeldenummer: EP9301273
(87) Internationale Veröffentlichungsnummer: WO9402000

(56) Entgegenhaltungen:
- EP-A- 0 138 502
- AU-B- 429 608
- US-A- 4 168 677

## Beschreibung

Die Erfindung bezieht sich auf eine Melkanlage mit einem Ventil zum Rückspülen von Melkbechern, wobei das Ventil aus einem Gehäuse besteht mit einem im Innenraum des Gehäuses angeordneten beweglichen Ventilkörper, wobei das Gehäuse mit drei Anschlußstutzen versehen ist, von denen ein erster Anschlußstutzen mit den Melkbechern, ein zweiter Anschlußstutzen mit der Melkleitung und ein dritter Anschlußstutzen mit einer Rückspülleitung in Verbindung steht und der Ventilkörper in einer Melkstellung den ersten und den zweiten Anschlußstutzen miteinander verbindet und den dritten Anschlußstutzen absperrt, und in einer Rückspülstellung den ersten Anschlußstutzen mit dem dritten Anschlußstutzen verbinden und den zweiten Anschlußstutzen absperrt.

Ein derartiges Ventil ist bekannt aus der US-A-4,168,677. Diese Ventile müssen so ausgebildet sein, daß auch bei einem undichten Ventilsitz in der Melkstellung keine Flüssigkeit von der Rückspülleitung zu den Melkbechern oder der Melkleitung gelangen kann. Bei dem bekannten Ventil wird diese Forderung erfüllt durch ein zur Atmosphäre offen gestaltetes Gehäuse, so das bei undichtem Ventilsitz Flüssigkeit nach außen austreten kann. Es kann jedoch nicht verhindert werden, daß sich Milchreste auf den Flächen des Ventilkörpers absetzen, die im Laufe der Zeit zu einer Keimvermehrung führen, wodurch es zu einer unerwünschten Beeinträchtigung der Milchqualität beim Melkvorgang kommen kann. Ohne gelegentliche Demontage und manuelle Reinigung des Ventils ist daher der erforderliche Hygienestatus über einen längeren Zeitraum nicht einzuhalten.

Aufgabe der Erfindung ist es, ein Ventil zu schaffen, das ohne manuellen Eingriff dauernd in einem hygienisch einwandfreien Zustand verbleibt.

Diese Aufgabe wird dadurch gelöst, daß eine Reinigungsstellung des Ventilkörpers vorgesehen ist, in der der erste Anschlußstutzen und der zweite Anschlußstutzen mit dem Innenraum des Gehäuses verbunden sind, der dritte Anschlußstutzen abgesperrt ist und ein Kanal, der den Innenraum mit der Atmosphäre verbindet, in dieser Stellung geschlossen ist.

Da das Gehäuse in der Reinigungsstellung zur Atmosphäre abgedichtet ist und der erste und der zweite Anschlußstutzen mit dem Innenraum des Gehäuses verbunden sind, wird in dieser Stellung sowohl der Ventilkörper als auch der Innenraum des Gehäuses von der Reinigungsflüssigkeit umspült, die durch Unterdruck am zweiten Anschlußstutzen über den ersten Anschlußstutzen angesaugt wird. Dadurch werden der Ventilkörper und der Innenraum des Gehäuses in einem einwandfreien Hygienestatus gehalten.

Eine vorteilhafte Ausgestaltung ist dadurch gekennzeichnet, daß das Gehäuse aus zwei Gehäusehälften besteht, zwischen denen in der Melkstellung und der Rückspülstellung ein den Innenraum des Gehäuses mit der Atmosphäre verbindender Kanal freigegeben wird, wobei der Ventilkörper als Drehschieber ausgebildet ist, auf dessen Planflächen die in den Innenraum des Gehäuses mündenden Anschlußstutzen abdichtend zu Anlage bringbar sind, der Drehschieber mit Kanälen versehen ist, die in der Melkstellung den ersten Anschlußstutzen und den zweiten Anschlußstutzen und in der Rückspülstellung den ersten und den dritten Anschlußstutzen miteinder verbinden, und die Planflächen mit je einer Ausnehmung versehen sind, in die der erste und der zweite Anschlußstutzen in der Reinigungsstellung münden, und die in dieser Stellung eine Bewegung der ersten Gehäusehälfte gegen die zweite Gehäusehälfte in eine Position ermöglichen, in der der Kanal verschlossen ist. Diese Ausgestaltung ermöglicht eine besonders kostengünstige Lösung.

Bei einer weiteren vorteilhaften Ausgestaltung werden die Gehäusehälften durch eine Feder unter Vorspannung zueinander gehalten, durch die die Gehäusehälften in der Reinigungsstellung gegeneinander gedrückt werden.

Die Betätigung des Ventilkörpers erfolgt in vorteilhafter Weise durch einen Hubzylinder, der eine Zahnstange bewegt, die mit einem Zahnritzel in Wirkverbindung steht, das auf einem Lagerzapfen des Ventilkörpers außerhalb des Gehäuses angeordnet ist.

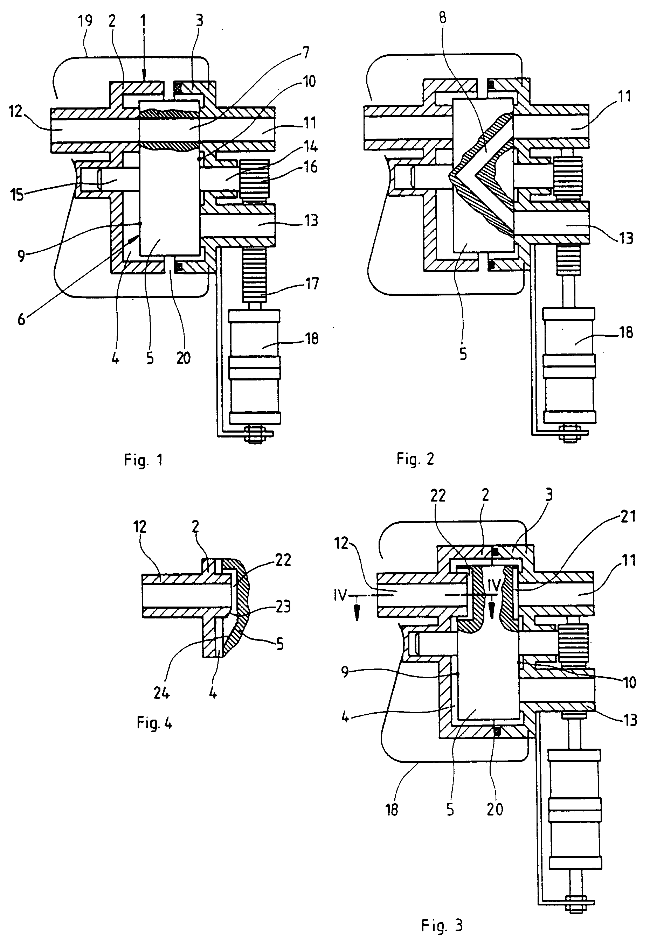

Ausführungsbeispiele der Erfindung sind in der Zeichnung dargestellt und werden nachstehend näher erläutert. Es zeigen:
Fig. 1 das Ventil in der Melkstellung
Fig. 2 das Ventil in der Rückspülstellung
Fig. 3 das Ventil in der Reinigungsstellung
Fig. 4 einen Schnitt IV-IV gemäß Fig. 3
Mit 1 ist in der Fig. 1 das Gehäuse bezeichnet, das aus den Gehäusehälften 2 und 3 besteht, zwischen denen der Innenraum 4 gebildet wird, in dem ein als Drehschieber 5 ausgebildeter Ventilkörper 6 angeordnet ist. Der Drehschieber 5 ist mit Kanälen 7, 8 versehen, die auf einer der beiden Planflächen 9, 10 des Drehschiebers 5 beginnen und enden. Am Gehäuse 1 sind ein erster Anschlußstutzen 11, ein zweiter Anschlußstutzen 12 und ein dritter Anschlußstutzen 13 angeordnet, die mit den Kanälen 7, 8 in Wirkverbindung bringbar sind. Der Drehschieber 5 ist über Lagerzapfen 14, 15 im Gehäuse 1 gelagert, wobei am Lagerzapfen 14 ein Zahnritzel 16 vorgesehen ist, das mit einer Zahnstange 17 in Verbindung steht, die über einen Hubzylinder 18 bewegbar ist. Die Gehäusehälften 2 und 3 werden durch eine Feder 19 unter Vorspannung zueinander gehalten, wobei in Abhängigkeit von der Stellung des Drehschiebers 5 zwischen den Gehäusehälften ein Kanal 20 gebildet sein kann, der den Innenraum 4 mit der Atmosphäre verbindet.

In der Stellung des Ventilkörpers 6 gemäß Fig. 1 stehen der erste Anschlußstutzen 11, der mit nicht dargestellten Melkbechern verbunden ist, und der zweite Anschlußstutzen 12, der mit einer nicht dargestellten Melkleitung verbunden ist, über den Kanal 7 miteinander in Verbindung. In dieser Phase kann die Milch beim Melkvorgang ungehindert durch das Ventil strömen.

Zur Rückspülung der Melkbecher wird der Drehschieber 5 durch Betätigung des Hubzylinders 18 in die aus der Fig. 2 ersichtliche Stellung gebracht, in der der erste Anschlußstutzen 11 über den Kanal 8 mit dem dritten Anschlußstutzen 13 verbunden ist, der mit einer nicht dargestellten Spüleinrichtung in Verbindung steht. In dieser Stellung können die Melkbecher mit einer Spülflüssigkeit beschickt werden.

Bevor die gesamte Melkanlage mit einer Reinigungslösung durchspült wird, wird der Drehschieber 5 in die aus der Fig. 3 ersichtlichen Position bewegt. Auf den Planflächen 9, 10 des Drehschiebers 5 sind Ausnehmungen 21, 22 vorgesehen, in die in dieser Stellung der erste und der zweite Anschlußstutzen 11, 12 münden. Die Ausnehmung 22 ist so ausgebildet, daß sie den in den Innenraum 4 hineinragenden Teil des zweiten Anschlußstutzens 12 aufnehmen kann, wodurch eine Bewegung der Gehäusehälfte 2 gegen die Gehäusehälfte 3 in eine Dichtposition ermöglicht wird, in der der zur Atmosphäre führende Kanal 20 geschlossen ist. Die durch die Melkanlage strömende Reinigungslösung gelangt über den ersten Anschlußstutzen 11 und die Ausnehmung 21 in den Innenraum 4 des Gehäuses 1 und verläßt den Innenraum 4 über die Ausnehmung 22 und den zweiten Anschlußstutzen 12. Dabei wird sowohl der Innenraum 4 als auch der Drehschieber 5 intensiv gereinigt.

Wie aus der Fig. 4 ersichtlich, ist der in den Innenraum 4 mündende Teil des Anschlußstutzens 12 mit einer Schräge 23 und die Ausnehmung 22 mit einer Schräge 24 versehen. Dadurch wird bei einer Bewegung des Drehschiebers 5 in die Melk- oder Rückspülstellung selbsttätig eine axiale Verschiebung der Gehäusehälfte 2 bewirkt.

Statt der beiden Gehäusehälften 2, 3 kann auch ein geschlossenes Gehäuse verwendet werden, das einen mit der Atmosphäre in Verbindung stehenden Ventilkörper aufweist, der durch den Drehschieber in der Melk- und Rückspülstellung zwangsweise geöffnet und in der dritten Reinigungsstellung zwangsweise geschlossen wird.

## Patentansprüche

1. Melkanlage mit einem Ventil zum Rückspülen von Melkbechern, wobei das Ventil aus einem Gehäuse (1) besteht mit einem im Innenraum des Gehäuses (1) angeordneten beweglichen Ventilkörper (6), wobei das Gehäuse (1) mit drei Anschlußstutzen (11, 12, 13) versehen ist, von denen ein erster Anschlußstutzen (11) mit den Melkbechern, ein zweiter Anschlußstutzen (12) mit der Melkleitung und ein dritter Anschlußstutzen (13) mit einer Rückspülleitung in Verbindung steht und der Ventilkörper (6) in einer Melkstellung den ersten (11) und den zweiten Anschlußstutzen (12) miteinander verbindet und den dritten Anschlußstutzen (13) absperrt, und in einer Rückspülstellung den ersten Anschlußstutzen (11) mit dem dritten Anschlußstutzen (13) verbindet und den zweiten Anschlußstutzen (12) absperrt, **dadurch gekennzeichnet**, daß eine Reinigungsstellung des Ventilkörpers (6) vorgesehen ist, in der der erste Anschlußstutzen (11) und der zweite Anschlußstutzen (12) mit dem Innenraum (4) des Gehäuses (1) verbunden sind, der dritte Anschlußstutzen (13) abgesperrt ist und ein Kanal (20), der den Innenraum (4) mit der Atmosphäre verbindet, in dieser Stellung geschlossen ist.

2. Melkanlage nach Anspruch 1, dadurch gekennzeichnet, daß das Gehäuse (1) aus zwei Gehäusehälften (2, 3) besteht, zwischen denen in der Melkstellung und der Rückspülstellung ein den Innenraum (4) des Gehäuses (1) mit der Atmosphäre verbindender Kanal (20) freigegeben wird, wobei der Ventilkörper (6) als Drehschieber (5) ausgebildet ist, auf dessen Planflächen (9, 10) die in den Innenraum (4) des Gehäuses (1) mündenden Anschlußstutzen (11, 12, 13) abdichtend zu Anlage bringbar sind, der Drehschieber (5) mit Kanälen (7, 8) versehen ist, die in der Melkstellung den ersten (11) und den zweiten Anschlußstutzen (12) und in der Rückspülstellung den ersten Anschlußstutzen (11) und den dritten Anschlußstutzen (13) miteinder verbinden, und die Planflächen (9, 10) mit je einer Ausnehmung (21, 22) versehen sind, in die der erste und der zweite Anschlußstutzen (11, 12) in der Reinigungsstellung münden, und die in dieser Stellung eine Bewegung der Gehäusehälfte (2) gegen die Gehäusehälfte (3) in eine Position ermöglichen, in der der Kanal (20) verschlossen ist.

3. Melkanlage nach Anspruch 1 oder 2, dadurch gekennzeichnet, daß die Gehäusehälften (2, 3) durch eine Feder (19) unter Vorspannung zueinander stehen.

4. Melkanlage nach einem der Ansprüche 1 bis 3, dadurch gekennzeichnet, daß ein Lagerzapfen (14) des Ventilkörpers (6) außerhalb des Gehäuses (1) mit einem Zahnritzel (16) versehen ist, die mit einer Zahnstange (17) in Wirkverbindung steht, die durch einen Hubzylinder (18) bewegbar ist.

## Claims

1. Milking installation with a valve for rinsing teat cups, whereby the valve consists of a housing in the interior of which is arranged a movable valve body (6), whereby the housing (1) is provided with three connectors (11, 12, 13) of a which a first connector (11) is connected with the teat cups, a second connector (12) is connected with the milk line and a third connector (13) is connected with a rinse line (13) and the valve body in milking position connects the first (11) and the second connector (12) and shuts off the third connector (13) and in rinse position connects the connector (11) with the third connector (13) and shuts off the second connector (12), **characterised in that** a cleaning position of the valve body (6) is provided in which the first connector (11) and the second connector (12) are connected to the interior (4) of the housing (1), the third connector (13) is shut off and a channel (20), which connects the interior (4) to the atmosphere, is closed in this position.

2. Milking installation according to claim 1, **characterised in that** the housing (1) comprises two housing halves (2, 3) between which in the milking position and rinsing position a channel (20) connecting the interior (4) of the housing (1) with the atmosphere is released, whereby the valve body (6) is designed as a rotary slide valve on whose plane faces (9, 10) the connectors (11 ,12 13) opening up into the interior (4) of the housing (1) can be brought into a sealing position, the rotary slide valve (5) is provided with channels (7, 8), which in the milking position connect the first (11) and the second connector (12) and in the rinsing position connect the first connector (11) and the third connector (13), the plane faces (9, 10) each being provided with a recess (21, 22) into which the first and second connectors open up in the rinsing position and which in this position permit the housing half (2) to be moved against the housing half (3) into a position where the channel (20) is sealed.

3. Milking installation according to claim 1 or 2, **characterised in that** the housing halves (2, 3) are under pretension with one another by means of a spring (19).

4. Milking installation according to one of the claims 1 to 3, **characterised in that** a bearing journal (14) of the valve body (6) is provided with a toothed pinion (16) outside of housing (1) which toothed pinion (16) is connected to a toothed rod (17) which can be moved by means of a lifting cylinder (18).

## Revendications

1. Installation de traite équipée d'une vanne de rinçage de gobelets trayeurs, la vanne étant constituée par un boîtier (1) muni d'un corps de vanne mobile (6) disposé l'intérieur dudit boitier (1), celui-ci possédant trois embouts de raccordement (11, 12, 13), dont le premier (11) communiquet avec les gobelets trayeurs, le deuxième (12) avec le lactoduc et le troisième (13) avec une conduite de rinçage, le corps de vanne (6), quand il se trouve en position de traite, reliant le premier embout (11) au deuxime embout (12) tout en fermant le troisièeme embout 13), et, quand il se trouve en position de rinçage, reliant le premier embout (11) au troisième embout (13) tout en fermant le deuxième embout (12), **caractérisé en ce** qu'il est prévu une position de lavage du corps de vanne (6) assurant la liaison du premier embout (11) et du deuxièeme embout (12) avec l'espace intérieur (4) du boîtier (1) et, en même temps, la fermeture du troisième embout (13) et d'un canal (20) reliant l'espace intérieur (4) à l'atmosphère.

2. Installation de traite selon revendication 1, caractérisée en ce que le boîtier (1) est constitué par deux demi-boîtiers (2, 3) entre lesquels, en position de traite, un canal (20) reliant l'espace intérieur (4) du boîtier (1) avec l'atmosphère est libéré, le corps de vanne (6) comprenant un tiroir tournant (5) sur les surfaces planes duquel (9, 10) les embouts (11, 12, 13) menant dans l'espace intérieur (4) du boîtier (1) peuvent être appliqués de manière étanche, le tiroir tournant (5) étant muni de canaux (7, 8) qui, en position de traite, relient le premier embout et le deuxième embout (12) et, en position de rinçage, relient le premier embout (11) et le troisième embout (13) et les surfaces planes (9, 10) étant munies d'encoches (21, 22) dans lesquelles le premier et le deuxième embout (11,12) dbouchent en en position de rinçage et qui, dans cette position, provoquent le dplacement du demi-boîtier (2) envers le demi-boîtier (3), ainsi arrivant à une position permettant la fermeture du canal (20)

3. Installation de traite selon revendication 1 ou 2, caractérisée en ce qui les demi-boîtiers (2, 3) se trouvent sous une tension initiale l'un envers l'autre grâce à un ressort (19)

4. Installation de traite selon l'une des revendications 1 à 3, caractérisée en ce qu'un tourillon (14) du corps de vanne (6) en dehors du boitier (1) est muni d'un pignon (1) communiquant avec une crémaillère (17) pouvant être actionnée par un cylindre de levage (18).
